# EUROPÄISCHE PATENTANMELDUNG

(11) **EP 1 238 855 A1**
(43) Veröffentlichungstag der Anmeldung: **11.09.2002**
(21) Anmeldenummer: 01105721.3
(22) Anmeldetag: 07.03.2001
(51) Int. Cl.: B60P 1/44

(54) **Ladebordwandsystem für Fahrzeuge**

(71) Anmelder: Sörensen Hydraulik Zweigniederlassung, Ulfborg, Filial af Sörensen Hydraulik GmbH, Tyskland, 6990 Ulfborg (DK)
(72) Erfinder: Jensen, Jens Herman, 6990 Ulfborg (DK)
(74) Vertreter: Niedmers, Ole, Dipl.-Phys.

(57) **Zusammenfassung**

Es wird ein Ladebordwandsystem (10), insbesondere für Fahrzeuge (11), vorgeschlagen, umfassend eine Ladeplattform (12) zum Heben und Absenken einer Last, ggf. auch zum Klappen aus der Horizontalen in die Vertikale und aus der Vertikalen in die Horizontale, mittels eines Hubaktuators (13) und ggf. eines Klappaktuators (14), wobei der Hubaktuator (13) und ggf. der Klappaktuator (14) über hand- und/oder fußbetätigbare Steuerglieder (15; 16; 17), die mit einer Steuereinheit (18) sowie sonstigen Steuergliedern (17) zusammenwirken, zum Heben und Absenken und ggf. Klappen der Ladeplattform (12) gesteuert wird bzw. werden. Dabei ist eine Hilfssteuereinheit (19) vorgesehen, mittels der wenigstens ein Steuersignal oder eine Steuersequenz zur Betätigung des Hubaktuators (13) und ggf. zur Betätigung des Klappaktuators (14) im Falle einer Störung und/oder eines Ausfalls von Steuergliedern (15; 16; 17) und/oder der Steuereinheit (18) und/oder eines Handhabungsfehlers wenigstens zum Erhalt von Vitalfunktionen des Ladebordwandsystems (10) erzeugbar ist.

## Beschreibung

Die Erfindung betrifft ein Ladebordwandsystem, insbesondere für Fahrzeuge, umfassend eine Ladeplattform zum Heben und Absenken einer Last, ggf. auch zum Klappen aus der Horizontalen in die Vertikale und aus der Vertikalen in die Horizontale, mittels eines Hubaktuators und ggf. eines Klappaktuators, wobei der Hubaktuator und ggf. der Klappaktuator über hand- und/oder fußbetätigbare Steuerglieder, die mit einer Steuereinheit sowie sonstigen Steuergliedern zusammenwirken, zum Heben und Absenken und ggf. zum Klappen der Ladeplattform gesteuert wird bzw. werden.

Ladebordwandsysteme der eingangs genannten Art sind in den verschiedensten konstruktiven Ausgestaltungen seit Jahrzehnten bekannt und werden regelmäßig am rückwärtigen Ende eines Klappfahrzeugchassis positioniert, d.h. sind dort in der Regel fest angebaut, um Lasten von einem unteren Be- und Entladungsniveau, regelmäßig dem Fahrbahnuntergrund, auf das Niveau einer Ladefläche des Fahrzeugs, an dem das Ladebordwandsystem angebracht ist, zu befördern, so daß die Güter auf die Ladefläche des Fahrzeugs verbracht werden können. Umgekehrt werden Güter von der Ladefläche auf gleiche Weise auf die auf das Niveau der Ladeplattform des Fahrzeugs angehobene Ladeplattform verbracht und dann auf das Abladeniveau, wiederum regelmäßig gebildet durch den Fahrbahnuntergrund, abgesenkt und dann von der Ladeplattform entfernt.

Bei einigen dieser Ladeplattformsysteme dient die Ladeplattform selbst auch als in Fahrzeuglängsrichtung hintere Begrenzungswand der Ladefläche, d.h. nach Abschluß des Be- bzw. Entladevorganges wird die Ladeplattform im wesentlichen auf das Niveau der Ladefläche angehoben und aus der Horizontalen in die Vertikale geklappt, so daß die hintere Begrenzungswand der Ladefläche eines Fahrzeugs entsteht.

Bei anderen Ladebordwandsystemen fehlt die Klappfunktion der Ladeplattform aus der Horizontalen in die Vertikale und umgekehrt, wenn bspw. die Fahrzeuge eine kofferartige Karosserie aufweisen, bspw. in Form von Thermos- bzw. Kühlkoffern. Derartige Karosserien weisen zum hermetischen Verschließen des Kofferaufbaues eigene rückwärtige Türen auf, um eben ein sicheres Verschließen des Inneren des Koffers zu gewährleisten. Bei derart ausgerüsteten Fahrzeugen verwendete Ladebordwandsystem werden regelmäßig sog. Faltladeplattformen verwendet, die bei Nichtgebrauch etwa mittig zusammengeklappt werden und unter den Heckbereich des Fahrzeugs verschoben werden können. Die Hub- und Absenkfunktion der Ladeplattform wird mit wenigstens einem Hubaktuator ausgeführt und, soweit bestimmungsgemäß erforderlich, die Klappfunktion wird durch wenigstens einen Klappaktuator bewirkt. Die Hubaktuatoren und auch die Klappaktuatoren können in Form von Kolben-Zylinder-Systemen hydraulisch und/oder pneumatisch betätigt werden, es sind aber auch elektrisch betätigte Hub- und Klappaktuatoren möglich und auch Mischformen aus den vorgen. Antriebsmitteln.

Völlig unabhängig davon, wie die Hubaktuatoren und ggf. die Klappaktuatoren im vorbeschriebenen Sinne betätigt und gesteuert werden, unterliegen Ladebordwandsysteme der vorbeschriebenen Art einer natürlichen Abnutzung durch den regelmäßig zu erwartenden sehr rauhen Handhabungsbetrieb im Zusammenhang mit dem Beladen und Entladen von Fahrzeugen. Vielfach werden die derart ausgerüsteten Fahrzeuge nicht von geschulten Kraftfahrern betätigt, sondern auch von fahrzeugtechnischen Laien, bspw. dann, wenn derartig ausgerüstete Fahrzeuge an temporäre Benutzer von Autovermietungsgesellschaften ausgeliehen werden.

Nicht nur aufgrund von Bedienungsfehlern der Steuerung derartiger Ladebordwandsysteme durch die Bedienungsperson, sondern auch durch äußere Einflüsse wie das Eindringen von Wasser, Feuchtigkeit, Staub, Öl und Kraftfahrzeugdämpfen und dgl. oder auch durch Überlast oder den Bruch von pneumatischen, hydraulischen und elektrischen Leitungen kann es passieren, daß das Ladebordwandsystem während des Be- und Entladevorganges außer Funktion gesetzt wird. Wenn bspw. das das Ladebordwandsystem außer Funktion setzende Ereignis dann eintritt, wenn bspw. die Ladebordwand auf den Fahrbahnuntergrund abgesenkt ist oder, falls die Ladebordwand auch zum Klappen geeignet sein soll, der Klappvorgang der Ladebordwand nach Eintreten des funktionsbeeinträchtigenden Ereignisses nicht mehr aus der Horizontalen in die Vertikale durchgeführt werden kann, darf das Fahrzeug mit eigener Antriebskraft nicht bewegt werden, um es bspw. in eine Werkstatt zur Behebung der Funktionsstörung zu fahren.

Es sind in diesem Falle vielmehr sehr aufwendige Abschleppmaßnahmen erforderlich und zusätzliche rückwärtige Sicherheitsmaßnahmen, um bei den vorgen. Beispielen von Funktionsstörungen beim Fahren des Fahrzeugs die übrigen Verkehrsteilnehmer nicht zu gefährden. Bei auf dem Boden abgesenkter Ladeplattform muß sogar regelmäßig eine Reparatur des Ladebordwandsystems an Ort und Stelle erfolgen, da das Fahrzeug mit abgesenkter Ladeplattform überhaupt nicht bewegbar ist, was mit dem Anreisen von Reparateuren verbunden ist und neben den Reparaturkosten vor Ort auch mit sehr großen Zeitverlusten und damit weiteren Kosten verbunden ist, da das Fahrzeug so lange an Ort und Stelle verharren muß.

Dieses an sich bekannte Problem hat man durch mehr oder weniger aufwendige Maßnahmen im Falle der Funktionsstörung bzw. der Außerbetriebsetzung des Ladebordwandsystems zu beheben versucht, indem bspw. mit Winden betätigbare Seile im Fahrzeug mitgeführt wurden, um damit wenigstens ein Anheben und ggf. auch Klappen der Ladebordwand aus dem abgesenkten bzw. horizontal geklappten Zustand in den angehobenen bzw. vertikalen Zustand vornehmen zu können. Dieses ist bei kleinen Ladebordwandsystemen an kleinen Kraftfahrzeugen möglicherweise manuell noch möglich, aufgrund des beträchtlichen Eigengewichtes der Ladeplattform sowie des Hubaktuators und ggf. des Klappaktuators und der entsprechenden Tragwerke, die die Ladeplattform drehbar und schwenkbar mit dem Fahrzeug verbinden, sowie der durch die Antriebe der Aktuatoren erzeugten Gegenkraft, ist ein manuelles Handhaben in den besagten Fällen nicht mehr möglich.

Es ist somit Aufgabe der vorliegenden Erfindung, ein Ladebordwandsystem der eingangs genannten Art zu schaffen, mit dem im Falle von Funktionsstörungen oder eines Funktionsausfalles zur bestimmungsgemäßen Steuerung und Betätigung des Ladebordwandsystems dieses dennoch auf einfache Weise ohne zusätzliche Hilfsmittel in einen solchen Zustand überführt werden kann, daß das Fahrzeug mit dem funktionslosen bzw. funktionseingeschränkten Ladebordwandsystem mit eigener Kraft zu einer Reparaturstätte überführt werden kann und dabei die eigene Verkehrssicherheit des Fahrzeugs sowie die Sicherheit der übrigen Verkehrsteilnehmer nicht beeinträchtigt wird, wobei das System sicher und dennoch einfach im Aufbau sein soll und nicht nur in neu gefertigten Ladebordwandsystemen Anwendung finden können soll, sondern auch in bestehende Ladebordwandsysteme nachträglich im Sinne einer Nachrüstung integriert werden können soll.

Gelöst wird die Aufgabe gem. der Erfindung dadurch, daß eine Hilfssteuereinrichtung vorgesehen ist, mittels der wenigstens ein Steuersignal oder eine Steuersequenz zum Betrieb des Hubaktuators und ggf. zum Betrieb des Klappaktuators im Falle einer Störung und/ oder eines Ausfalls von Steuergliedern und/oder der Steuereinheit und/oder eines Handhabungsfehlers zum Erhalt wenigstens von Vitalfunktionen des Ladebordwandsystems erzeugbar ist.

Vitalfunktionen im vorbeschriebenen Sinne bedeutet Funktionen des Ladebordwandsystems im Hinblick auf die möglichen Bewegungsabläufe der Ladeplattform im oben beschriebenen Sinne derart, daß auch bei Funktionsstörungen des Ladebordwandsystems oder eines kompletten Ausfalls der normalen Steuerungsmöglichkeit des Ladebordwandsystems dennoch eine Bedienbarkeit des Ladebordwandsystems möglich ist, die von entscheidender Bedeutung für die selbständige Verfahrbarkeit des Fahrzeugs zu einem Reparatur- bzw. Wartungsort mit eigener Kraft ist. Es sollen also auch in diesem Sinne wenigstens die wirklich dafür lebenswichtigen Funktionen in einem Hilfs- bzw. Notsteuermodus derart ausführbar sein, daß, wie gesagt, das Fahrzeug ohne fremde Hilfe an einen Reparatur- oder Wartungsort verfahrbar ist.

Der Vorteil der erfindungsgemäßen Lösung besteht darin, daß die Bedienungsperson, sei es nun der Berufskraftfahrer einerseits oder der ungeübte Fahrer andererseits, der sich ein mit einem Ladebordwandsystem ausgerüstetes Fahrzeug temporär geliehen hat, gleichermaßen auf einfache Weise in die Lage versetzt wird, das in seiner Funktion gestörte oder völlig außer Betrieb gesetzte Ladebordwandsystem derart "notzusteuern", daß das Fahrzeug ohne fremde Hilfe verkehrssicher in einen Reparatur- oder Wartungsort mit einer Kraft überführt werden kann und sogar schon im Einsatz befindliche Ladebordwandsysteme auf verhältnismäßig einfache Weise nachträglich derart um- bzw. ausgerüstet werden können, so daß bei diesen die lösungsgemäße Hilfs- bzw. Notfunktion ebenfalls ausführbar ist.

Gem. einer vorteilhaften Ausgestaltung der Erfindung umfaßt die Vitalfunktion wenigstens das Anheben der Ladeplattform. Es ist in diesem Falle zwar so, daß der nachfolgende Verkehr eines mit einer lediglich angehobenen Ladeplattform fahrenden Fahrzeugs, wenn es sich nicht um eine im hinteren Bereich des Fahrzeugs dann unterbringbare Faltladeplattform handelt, gewarnt werden muß, gleichwohl wird das eigentliche Fahrzeug aber durch die dann notangehobene Ladeplattform selbst in seiner Fahrbeweglichkeit nicht wesentlich behindert.

Bei einer anderen vorteilhaften Ausgestaltung des Ladebordwandsystems, das ggf. allein oder mit der vorbeschriebenen vorteilhaften Ausgestaltung der Hilfsbzw. Notanhebemöglichkeit versehen ist, umfaßt die Vitalfunktion wenigstens das Klappen der Ladeplattform aus der Horizontalen in die Vertikale. Wenn also die Funktionsstörung des Ladebordwandsystems eintritt, wenn sich bspw. die Ladeplattform in angehobenem Zustand befindet, kann die Ladeplattform aus der Horizontalen in die Vertikale hochgeklappt werden, so daß in diesem Falle bei der Überführung des Kraftfahrzeugs in eine Reparatur- oder Wartungsstätte nicht einmal rückwärtige Sicherungsmaßnahmen erforderlich sind.

Wie eingangs schon dargestellt, kann der Hubaktuator, oder, wenn mehrere Hubaktuatoren vorhanden sind, können die Hubaktuatoren, was gleichermaßen bei ggf. Vorhandensein eines oder mehrerer Klappaktuatoren gilt, von unterschiedlichen, die Aktuatoren betätigende Medien bspw. angetrieben werden, hydraulische, pneumatische oder elektrische. Gleichermaßen kann auch die Steuerung dafür vorteilhafterweise hydraulisch, pneumatisch oder elektrisch sein, wobei auch in diesem Falle beliebige geeignete Mischformen möglich sind. Aus diesem Grunde ist es bspw. vorteilhaft, auch die Steuersequenz entweder hydraulisch und/oder pneumatisch und/oder elektrisch auszubilden. In vielen Fällen wird das Ladebordwandsystem derart ausgerüstet sein, daß die Steuersequenz, wie gesagt, eine elektrische Steuersequenz ist, wobei in diesem Falle vorteilhafterweise die Steuersequenz mittels eines elektrischen Betätigungsorgans ausgelöst wird. Eine Entkopplung bspw. eines mit hydraulischen und/oder pneumatischen Mitteln betriebenen Klappaktuators bzw. betriebener Klappaktuatoren und/oder eines Hubaktuators oder mehrerer Hubaktuatoren von den eigentlichen Steuermitteln, die vorzugsweise elektrisch und/oder elektronisch ausgebildet sind bzw. wirken, schafft eine zusätzliche Redundanz zur Erhöhung der Betriebssicherheit des Ladebordwandsystems, so daß bspw. eine elektrische bzw. elektronisch ausgebildete bzw. wirkende Hilfssteuereinheit vorteilhafterweise in das Steuer- und Regelsystem des Ladebordwandsystems integrierbar ist.

Die Integration der Hilfssteuereinheit, ob nun elektrisch bzw. elektronisch und/oder hydraulisch und/oder pneumatisch, kann vorzugsweise fest in das Steuer- und Regelsystem erfolgen, was regelmäßig bei neu gefertigten Ladebordwandsystemen der Fall sein wird - aber nicht nur -, die derart ausgebildete Hilfssteuereinheit kann aber auch vorzugsweise in Form eines aus dem bzw. in das Steuer- und Regelsystem herausnehmbaren bzw. einsetzbaren Notsteuerelementes ausgebildet sein, wobei diese Ausgestaltung vorzugsweise bei erfindungsgemäß nachzurüstenden Ladebordwandsystemen - aber nicht nur - Anwendung findet.

Dieses Hilfssteuerelement kann vorzugsweise nach Art einer Steckkarte ausgebildet sein, die sich bspw. beim Kraftfahrer am Mann oder geeignet positioniert im Führerhaus des Fahrzeugs befindet, um sie bei Bedarf, d.h. im Falle der Funktionsstörung oder des Funktionsausfalls des Ladebordwandsystems, einsetzen zu können. Dies verhindert auch, daß die Not- bzw. Vitalfunktionen des Ladebordwandsystems nicht mißbräuchlich ausgelöst werden können, da zur Sicherstellung der Not- bzw. Vitalfunktionen des Ladebordwandsystems Sicherungseinrichtungen und Sicherungsmaßnahmen wie das Abschalten beim Erreichen eines Anschlages beim Heben bzw. Senkbetrieb bzw. ggf. Klappbetrieb des Ladebordwandsystems gegebenenfalls keinen funktionsmäßigen Einfluß bzw. keine funktionsfähige Wirkung haben und bei unsachgemäß ausgeführtem Notbetrieb somit eine Beschädigung bzw. Zerstörung des Ladebordwandsystems nicht ausschließbar ist.

Zusätzlich oder alternativ zur Steckkarte, auf der das Hilfssteuerelement angeordnet werden kann, kann das Hilfssteuerelement auch in Form einer sog. "Smart Card" ausgebildet sein, die ggf. zusätzlich auch noch benutzer- bzw. fahrerspezifisch codiert sein kann, um sicherzustellen, daß die lösungsgemäßen Not- bzw. Vitalfunktionen tatsächlich nur von dazu autorisierten Personen ausgelöst werden können.

Das Betätigungsorgan kann gem. einer weiteren anderen vorteilhaften Ausgestaltung des Ladebordwandsystems bspw. ein Mikroschalter sein oder in einer noch anderen vorteilhaften Ausgestaltung in Form eines Sensorschalters realisiert werden. Auch sind Mischformen dieser Schalterformen möglich oder solche Schalter, die im Stand der Technik als sog. "Pin-Schalter" bezeichnet werden, die bspw. nur mit einem spitzen Gegenstand wie einer Metallspitze oder einer Kugelschreiberspitze oder dergl. betätigt werden können.

Schließlich ist es vorzugsweise möglich, die lösungsgemäßen Not- bzw. Vitalfunktionen mittels einer numerischen, alphabetischen oder alphanumerischen Tastatur auszulösen, die bspw. mit der Hilfssteuereinheit steckbar verbindbar ist oder diese mit dem steckbaren Hilfssteuerelement ggf. integral als Einheit zu verbinden.

Grundsätzlich kann die Hilfssteuereinheit an beliebiger geeigneter Stelle, soweit sie für die Bedienungsperson zugänglich ist, am Fahrzeug selbst oder am Ladebordwandsystem angeordnet sein. Um aber das Ladebordwandsystem als komplett vorfertigbare Einheit herzustellen und bereitzustellen und für Austauschzwecke ggf. ebenfalls in dieser Form zur Verfügung zu haben, ist es vorteilhaft, das Ladebordwandsystem derart auszubilden, daß die Hilfssteuereinheit im Bereich der druckerzeugenden Einrichtung für die Betätigung des Hubaktuators und ggf. des Klappaktuators angeordnet wird oder aber, wenn der Hubaktuator bzw. die Hubaktuatoren und ggf. der Klappaktuator und die Klappaktuatoren elektrisch betrieben werden, im Bereich der Einrichtung für die Betätigung des Hubaktuators und ggf. des Klappaktuators.

Die Erfindung wird nun unter Bezugnahme auf die nachfolgenden schematischen Zeichnungen anhand eines Ausführungsbeispieles eingehend beschrieben. Darin zeigen:
- Fig. 1: in einem Blockschaltbild unter teilweiser Darstellung schaltungstechnischer Einzelheiten den Aufbau eines Steuerungssystems im Zusammenwirken mit dem zu steuernden Ladebordwandsystem unter Einschluß einer Hilfssteuereinheit,
- Fig. 2: sehr schematisch eine auf einer Steckkarte angeordnete Hilfssteuereinheit,
- Fig. 3: in perspektivischer Darstellung den typischen Aufbau eines mit einem Hubaktuator und einem Klappaktuator versehenen Ladebordwandsystems, das mittels der in den Fig. 1 und 2 dargestellten Elemente gesteuert werden kann einschließlich der Hilfssteuerung zum Erhalt der Vitalfunktionen des Ladebordwandsystems in auf einem Boden bzw. Fahrbahnuntergrund abgesenkter und abgeneigter Stellung,
- Fig. 4: eine Darstellung gem. Fig. 3, bei dem die Ladebordwand um den möglichen Neigungswinkel α geschwenkt sich in waagerechter bzw. horizontaler Stellung, aber noch abgesenkt, befindet,
- Fig. 5: eine Darstellung gem. Fig. 3, bei der die Ladebordwand in auf das Niveau einer Ladefläche eines Fahrzeugs angehoben ist,
- Fig. 6: die Ladebordwand gem. Fig. 3 in aus der Horizontalen gem. Fig. 5 in die Vertikale geklapptem Zustand,
- Fig. 7: die in Fig. 1 enthaltene Hilfssteuereinheit in größerer Einzelheit auf einer Platine angeordnet,
- Fig. 8: ein beispielhaft realisierter schaltungstechnischer Aufbau der in den Fig. 1 und 7 dargestellten Hilfssteuereinheit und die beispielhafte Verknüpfung der Hilfssteuereinheit mit den elektromagnetisch betriebenen Hydraulikventilen für den Betrieb des Hubaktuators und des Klappaktuators sowie des den Hydraulikmotor schaltenden elektromagnetischen Ventils bzw. Motorschützes,
- Fig. 9: in perspektivischer Darstellung die in einem Gehäuse aufgenommene Hilfssteuereinheit, die im Bereich der druckerzeugenden Einrichtung bzw. im Bereich des Hydraulikaggregats angeordnet werden kann, und
- Fig. 10: in perspektivischer Darstellung die aus dem Gehäuse gem. Fig. 9 herausgezogene, auf einer Leiterplatte gem. Fig. 7 ausgebildete Hilfssteuereinheit.

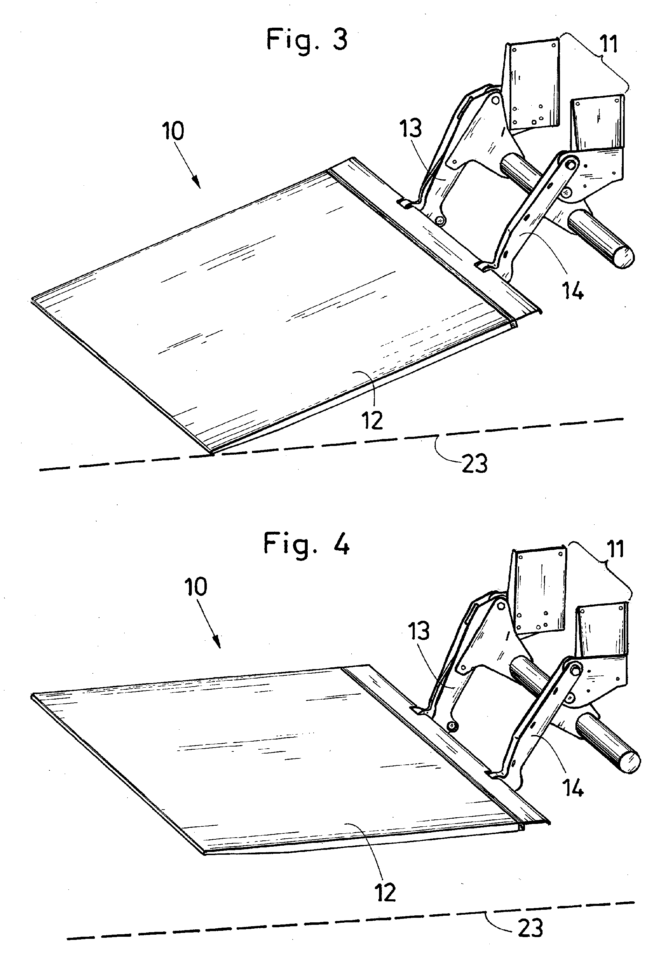

Zum besseren Verständnis des hier vorgeschlagenen Ladebordwandsystems 10 mit Hilfssteuereinheit 19 wird zunächst kurz auf die Darstellung des Ladebordwandsystems 10 gem. den Fig. 3 bis 6 Bezug genommen, die den rein mechanischen Teil des Ladebordwandsystems 10 im Zusammenwirken mit einem Hubaktuator 13 und einem Klappaktuator 14 zeigen, d.h. die einzelnen Stellungen, die die Ladeplattform 12, die an einem Fahrzeug 11 befestigt ist, zeigen.

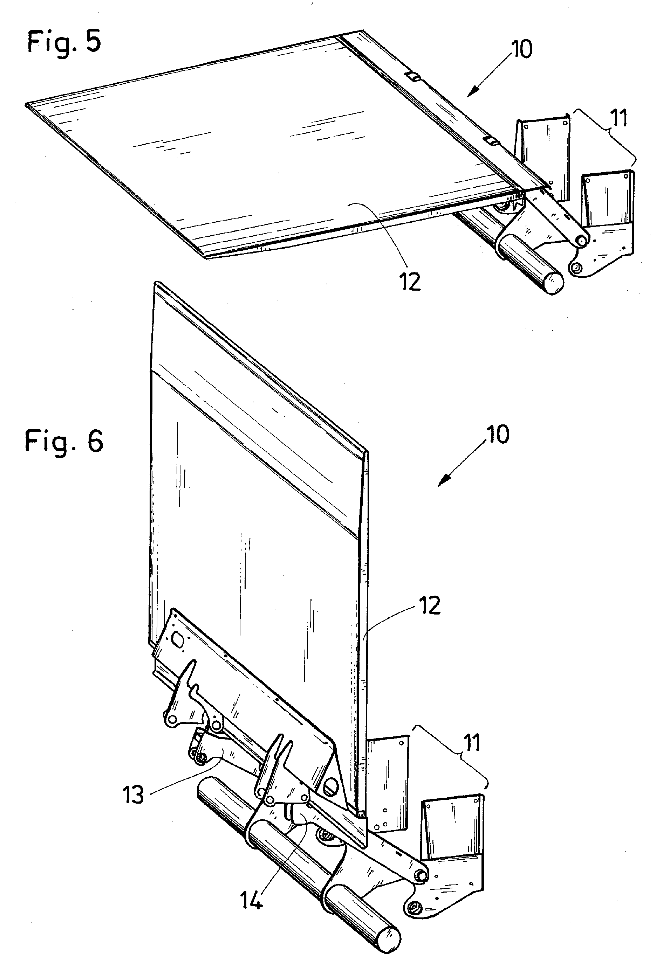

Mittels eines Hubaktuators 13 oder ggf. auch mehrerer Hubaktuatoren 13 wird die Ladeplattform 12 aus einer unteren Stellung auf dem Fahrbahnuntergrund 23, vgl. Fig. 4, in eine obere Stellung, vgl. Fig. 5, angehoben, wobei in angehobener Stellung die Ebene der Ladeplattform 12 dem Höhenniveau der Ladefläche (nicht dargestellt) eines Fahrzeugs 11 entspricht. Der Hubaktuator 13 bzw. mehrere Hubaktuatoren 13 ist bzw. sind auch für die kontrollierte Absenkung der Ladeplattform 12 aus einer angehobenen Stellung, vgl. Fig. 5, in eine abgesenkte Stellung, vgl. Fig. 4, verantwortlich. Aus der unteren Stellung gem. Fig. 4, bei der die Ladeplattform 12 im wesentlichen vertikal ausgerichtet ist, kann diese durch einen Klappaktuator 14 um einen geringen Kippwinkel « von einigen Graden abgekippt werden, so daß die vordere Kante der Ladeplattform 12 auf dem Untergrund bzw. einer Fahrbahn 23 aufliegt und somit darauf Lasten schwellenfrei verbracht bzw. entfernt werden können. Der Klappaktuator 14 wird auch dazu verwendet, in angehobener Stellung der Ladeplattform 12 gem. Fig. 4 die Ladeplattform 12 von der dort dargestellten Horizontalen in die Vertikale, vgl. Fig. 6, zu klappen und somit einen Abschluß für das hintere Ende einer Ladefläche eines Fahrzeugs 11 zu bilden oder aber dann, wenn das Fahrzeug 11 mit einer kofferförmigen Karosserie mit eigener rückwärtiger Tür versehen ist, an den Bereich der Tür zu klappen.

Eine als Faltladeplattform ausgebildete Ladeplattform 12, die keine Kippfunktion gem. Fig. 6 ausführt, ist hier nicht gesondert dargestellt, da alle Bewegungen, die eine Ladeplattform 12 auf vorbeschriebene Weise ausführen kann, mit Ausnahme der Schwenkbewegung von der Horizontalen in die Vertikale gem. der in Fig. 6 dargestellten Endstellung, auch von einer als Faltladeplattform ausgebildeten Ladeplattform ausgeführt werden können.

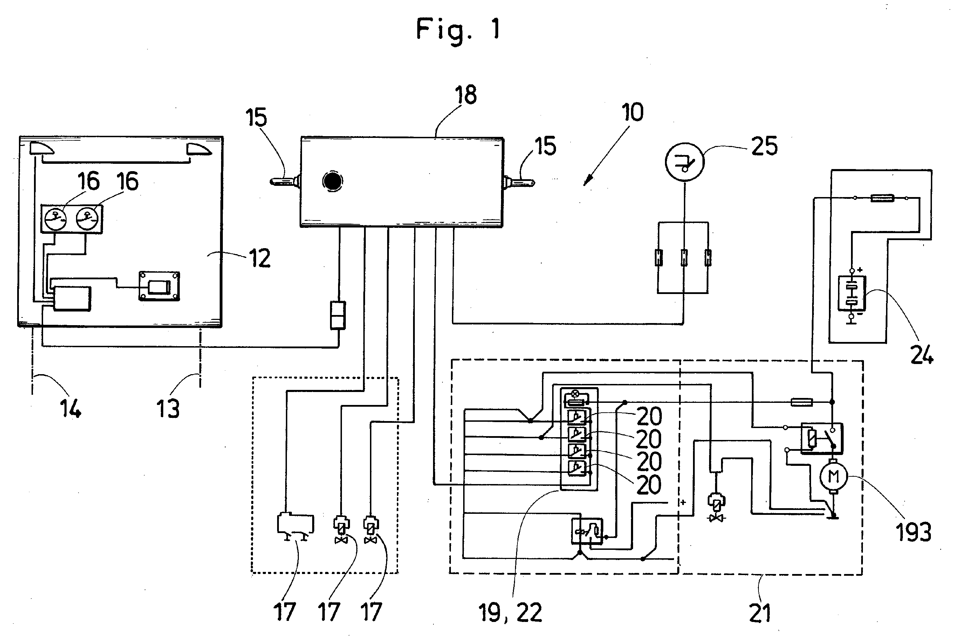

Es wird sodann Bezug genommen auf die Darstellung von Fig. 1, in der die Ladeplattform 12, eine Steuereinheit 18, eine druckerzeugende Einrichtung 21, bspw. ein Hydraulikaggregat mit den dazugehörigen Steuer- und Druckelementen, angeordnet ist. Steuerglieder 17, bspw. in Form von Magnetschaltern, die in vorbestimmten Endstellungen der Ladeplattform 12 auf den Hubaktuator 13 sowie den Klappaktuator 14 wirken, oder bspw. in Form eines Druckschalters ausgebildet sind, wenn sie auf den Hubaktuator 13 wirken, wenn die Ladeplattform 12 die abgekippte Stellung auf dem Fahrbahnuntergrund 23 erreicht hat, vgl. Fig. 3, sind auf an sich bekannte Weise mit der Steuereinheit 18 verbunden. Eine Spannungsversorgung 24 stellt die für den Betrieb des Ladebordwandsystems 10 mittels der Steuereinheit 18 und den übrigen Steuergliedern des Ladebordwandsystems 10 notwendige elektrische Spannung bereit und ist ebenfalls mit dem elektrischen Steuersystem des Ladebordwandsystems 10 verknüpft. Ebenfalls ist ein Ein-Ausschalter mit Indikator 25 über die Steuereinheit 18 mit dem Ladebordwandsystem 10 verbunden, um dieses ein- und auszuschalten und zu erkennen, ob das System ein- bzw. ausgeschaltet ist.

Auf der Ladeplattform 12 sind wenigstens zwei Fußsteuerglieder 16 angeordnet, die auf bekannte Weise das Anheben bzw. Absenken der Ladeplattform 12 in der Reihenfolge der Fig. 3, 4 und 5 durch entsprechende Fußbetätigung einer hier nicht dargestellten Bedienungsperson steuern und auch in umgekehrter Reihenfolge. Die Steuereinheit 18 ist demgemäß auch über geeignete elektrische Steuerleitungen mit der Ladeplattform 12 bzw. den Fußsteuergliedern 16 der Ladeplattform 12 verbunden.

An der Steuereinheit 18 sind Handsteuerglieder 15 vorgesehen, mittels denen die Bedienungsperson die verschiedenen, vorbeschriebenen Bewegungen der Ladeplattform 12 gem. den Fig. 3 bis 6 ausführen kann. Die erfindungsgemäßen Bewegungsabläufe des Ladebordwandsystems 10, wie sie in den Figuren dargestellt und hier beispielhaft beschrieben sind bzw. werden, werden aus einer Kombination aus elektrischen Steuersequenzen, die mittels der verschiedenen Steuerglieder 15, 16 und 17 ausgelöst bzw. gesteuert werden und mittels hier nicht dargestellter Hydraulikglieder, die unmittelbar auf die Aktuatoren 14, 15 wirken, bewirkt, um diese, bspw. als Kolben-Zylinder-Systeme ausgebildet, zu den verschiedenen Bewegungen zu veranlassen.

Es ist grundsätzlich möglich, die Steuerung, die hier in der Darstellung gem. Fig. 1 im wesentlichen aus einer elektrischen/elektronischen Regelung und Steuerung besteht, auch ausschließlich mittels hydraulischer und/oder pneumatischer Steuerungs- und Regelungsglieder vonstatten gehen zu lassen, ohne daß das erfindungsgemäße Prinzip verlassen wird.

In das hier in Form elektrischer bzw. elektronischer Steuer- und Regelkreise aufgebaute Steuer- und Regelsystem für das Ladebordwandsystem 10 ist eine Hilfssteuereinheit 19 integriert, die hier aus mehreren einzelnen Hilfssteuerelementen 22 besteht, die ein von außen zugängliches Betätigungsorgan 20 aufweisen. Die Hilfssteuerelemente 22 der Hilfssteuereinheit 19 sind derart in das Steuer- und/oder Regelsystem des Ladebordwandsystems 10 integriert, daß mit diesen jeweils wenigstens ein Steuersignal oder eine Steuersequenz zur Betätigung des Hubaktuators 13 und ggf., falls vorhanden, zur Betätigung des Klappaktuators 14 erzeugt werden kann, wenn bspw. Steuerglieder 15; 16; 17 oder die Steuereinheit 18 in ihrer Funktion gestört sind, bspw. verursacht durch einen Defekt dieser Glieder oder aufgrund äußerer Beeinflussung, die zur Zerstörung bzw. Funktionslosigkeit geführt hat. Die Fehlfunktion des Systems kann ggf. auch durch nicht den Bedienungsvorschriften entsprechende Handhabungsfehler des Ladebordwandsystems 10 verursacht werden bzw. worden sein oder durch so triviale Fehler, daß bspw. ein Handsteuerglied 15 der Steuereinheit 18 abgebrochen ist, oder bspw. durch ein Defektwerden von elektronischen Bauelementen der Steuereinheit 18, bspw. dem Defektwerden von Dioden, Transistoren oder dem Verbrennen von Steuerrelais in der Steuereinheit 18. Auch kann bspw. der Bruch einer Leiterbahn in der Steuereinheit 18 die Ursache für einen Defekt des Steuersystems oder die vollständige Funktionslosigkeit des Steuersystems des Ladebordwandsystems 10 sein. Schließlich kann auch der Bruch von elektrischen Verbindungskabeln innerhalb des Systems oder zum System Ursache für Fehlfunktionen des Steuersystems bzw. des gesamten Ausfalls des Steuersystems sein.

Um sicherzustellen, daß in diesen lediglich beispielhaft und nicht abschließend aufgeführten Fehlermöglichkeiten das mit dem Ladebordwandsystem 10 ausgerüstete Fahrzeug 11 wenigstens noch mit eigener Kraft eine Reparaturbzw. Wartungsstätte erreichen kann, können über die Hilfssteuereinheit 19 gem. der Erfindung zumindest die Vitalfunktionen des Ladebordwandsystems 10 aufrechterhalten werden, d.h. durch entsprechende Betätigung eines dafür bestimmten Betätigungsorgans 20 eines zugeordneten Hilfssteuerelementes 22 kann bspw. hilfsweise der Hubaktuator 13 noch so betätigt werden, daß er bspw. aus der Stellung gem. Fig. 3, in der verharrend der Fehler bzw. die Fehlfunktion beispielsweise aufgetreten ist, noch in eine Stellung wenigstens gem. Fig. 4 überführt werden kann. Zwar ist ein Fahren eines Fahrzeugs 11 mit einer gem. Fig. 4 horizontal ausgerichteten Ladeplattform 12 verkehrstechnisch bedenklich, durch geeignete Sicherheitsmaßnahmen wie Warnmittel oder ein dem Fahrzeug 11 hinterher fahrendes, die Ladeplattform 12 nach hinten sicherndes Fahrzeug bis zum nächstgelegenen Reparaturort ist ein Fahren des Fahrzeugs 11 mit eingeschränkter Geschwindigkeit möglich.

Sollte eine Funktionsstörung oder ein Ausfall des Steuersystems des Ladebordwandsystems bspw. in der Stellung der Ladeplattform 12 gem. Fig. 5 erfolgen, so ist mit geeigneter Betätigung eines dafür vorgesehenen Hilfssteuerelements 22 der Hilfssteuereinheit 19 noch ein Klappen in die Vertikale gem. Fig. 6 möglich.

Es kann auch vorgesehen sein, daß bei einer Störung oder einem Ausfall des Steuersystems des Ladebordwandsystems 10 in der Stellung gem. Fig. 4 ebenfalls durch geeignete Betätigung eines weiteren Hilfssteuerelementes 22 der Hilfssteuereinheit 19 ein Anheben der Ladeplattform 12 in die Stellung gem. Fig. 5 möglich ist und dann durch die vorbeschriebene Betätigung des für den Schwenkvorgang vorgesehenen Hilfssteuerelements 22 eine Verschwenkung der Ladeplattform 12 aus der Horizontalen gem. Fig. 5 in die Stellung gem. Fig. 6 zu bewirken.

Alle vorbeschriebenen Not- bzw. Hilfs-Bewegungsmöglichkeiten sind hier nur beispielhaft zu verstehen. Es ist erfindungsgemäß möglich, die Hilfssteuereinheit 19 derart auszubilden, daß, wenn auch im Hilfsbetrieb, faktisch alle Bewegungen der Ladeplattform 12 im Falle einer Störung oder eines kompletten Ausfalls des normalen Steuersystems des Ladebordwandsystems 10 wenigstens einmal ausgeführt werden können, um im Falle jedweder Störung das Fahrzeug 11 bewegen zu können, d.h. mit eigener Kraft eine Reparatur- oder Wartungsstätte zu erreichen. Mittels der Erfindung wird sichergestellt, daß dafür alle Vitalfunktionen des Ladebordwandsystems 10 faktisch in einem Not- bzw. Hilfs-Betätigungsmodus ausgeübt werden können. Die mittels der Hilfssteuereinheit 19 bzw. einer der Betätigungsorgane 20 der Hilfssteuereinheit 19 auslösbaren Steuersignale bzw. Steuersequenzen für die verschiedenen Bewegungen der Ladeplattform 12 im vorangehend beschriebenen Sinne ist hier ein elektrisches Steuersignal bzw. eine elektrische Steuersequenz, die die bestimmungsgemäße Not- bzw. Hilfs-Vitalfunktion im Sinne der oben beschriebenen Bewegungen bzw. Bewegungsabläufe der Ladeplattform 12 über die Aktuatoren 13 und ggf. auch 14 veranlassen bzw. ausführen kann. Grundsätzlich ist es auch möglich, selbst wenn das Steuersystem des Ladebordwandsystems 10 auf vorbeschriebene Weise im wesentlichen mittels elektrischer Mittel aufgebaut ist, die Not- bzw. Hilfs-Vitalfunktionen durch unmittelbares Einwirken auf die Aktuatoren 13 und ggf. 14 durch ein hydraulisches Steuersignal oder eine hydraulische Steuersequenz und/oder ein pneumatisches Steuersignal oder eine pneumatische Steuersequenz vonstatten gehen zu lassen. Dieses wird abhängig vom Gesamtaufbau des Ladebordwandsystems 10 und ggf. auch der Größe des Ladebordwandsystems 10 sowie der gewünschten Art der Bedienbarkeit des Ladebordwandsystems 10 abhängen.

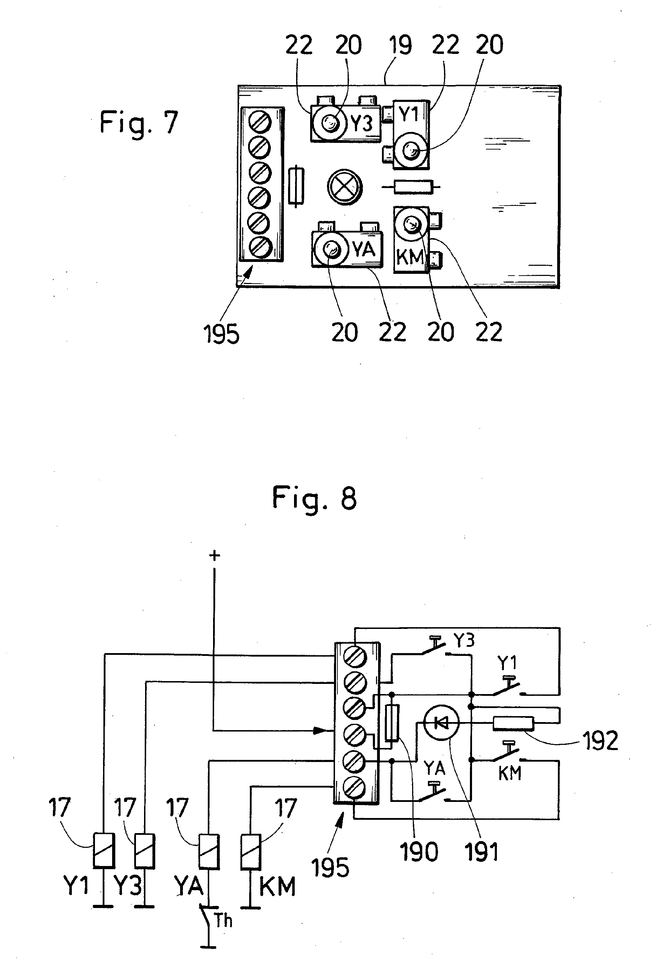

Zum besseren Verständnis der Funktion der Hilfssteuereinheit 19, mittels der das Signal bzw. die Signalsequenz für den Hubaktuator 13 bzw. den Klappaktuator 14 erzeugt wird, wird auf den beispielhaft angegebenen technischen Aufbau der Hilfssteuereinheit 19 auf Fig. 8 i.V.m. den Figuren 7 und 1 verwiesen. Von der Spannungsversorgung 24 des Fahrzeugs 11 bzw. des Ladebordwandsystems 10 gelangt positive Spannung auf die Sicherung 190 und von dort, in Fig. 8 nicht dargestellt, auf die Steuereinheit 18. Parallel dazu gelangt die positive Spannung auf vier Hilfssteuerelemente 22, in Fig. 8 mit Y1, Y3, YA und KM genannt. Die Hilfssteuerelemente 22 sind als Taste ausgebildet. Eine Leuchtdiode 191, die nach der Sicherung 190 dort mit ihrer Anode angeschlossen ist und mit ihrer Kathode über einen Widerstand 192 über das Hilfssteuerelement 22 YA am Minuspol der Versorgungsspannung anliegt, leuchtet, wenn Versorgungsspannung vorhanden ist und der in der Minusleitung der zugehörigen Ventilspule (YA, Steuerglied 17) zugehörige Thermoschalter Th vom Motor 193 nicht geschaltet hat (unterbricht den Stromfluß). Sollte die Leuchtdiode 191 nicht leuchten, ist entweder keine Spannung an der positiven Klemme der Hilfssteuereinheit 19 vorhanden (Spannungsversorgungseinrichtung 24 nicht angeschlossen), oder es ist ein Kurzschluß auf der Leitung zur Steuereinheit 18 vorhanden oder der Thermoschalter Th am Motor 193 hat ausgelöst.

Werden die Hilfssteuerelemente 22 YA, Y1, Y3 und KM betätigt, gelangt die positive Versorgungsspannung, abgenommen nach der Sicherung 190, über den Kontakt des betätigten Betätigungsorgans 20 auf die entsprechende Ventilspule (Steuerglieder 17) oder das Motorschütz (Steuerglied 17) und schaltet diese elektrisch ein. Durch eine Kombination der Betätigung der Hilfssteuerelemente 22 kann somit eine Bewegung der Ladeplattform 12 erzielt werden. Soll z.B. die Ladeplattform 12 angehoben werden, so wird das Hilfssteuerelement 22 mit der Bezeichnung KM und das Hilfssteuerelement 22 mit der Bezeichnung Y3 betätigt. Die Versorgungsspannung gelangt nun über die Sicherung 190 über das Hilfssteuerelement 22 mit der Bezeichnung KM zum zugehörigen Motorschütz und über das Hilfssteuerelement 22 mit der Bezeichnung Y3 zum entsprechenden Steuerglied 17 (Ventil) und steuert diese elektrisch an. Das Anheben der Ladeplattform 12 wird ausgeführt.

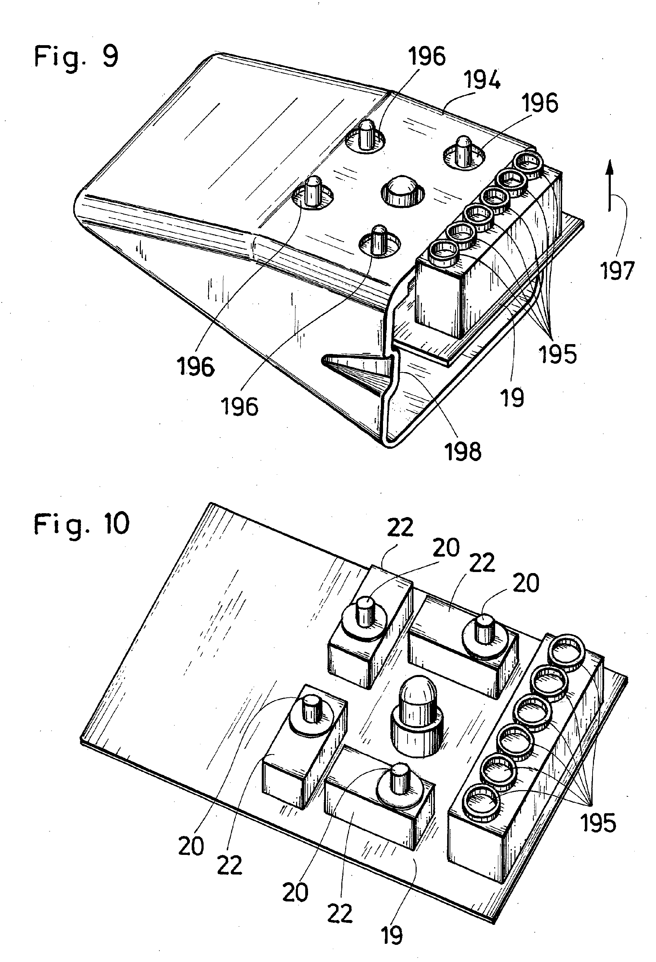

Ein Funktionsschema auf dem in Fig. 9 dargestellten Gehäuse der Hilfssteuereinheit 19 gibt an, welches Hilfssteuerelement 22 bzw. welches Betätigungsorgan 20 des Hilfssteuerelements 22 betätigt werden muß, um die gewünschte Bewegung der Ladeplattform 12 zu erreichen.

Im Normalfall werden die Steuerglieder 17 (Ventile, Motorschütz) von der Steuereinheit 18, vgl. Fig. 1, geschaltet. Dadurch, daß sämtliche elektrische Verbindungsleitungen der Steuerglieder 17 (Ventilspulen, Motorschütz) auch an der Hilfssteuereinheit 19 aufgelegt sind, ergibt sich die Möglichkeit, mit einem Spannungsmeßgerät zu prüfen, ob und welche Spannung am jeweiligen Steuerglied 17 (Ventil, Motorschütz) anliegt. Somit kann mittels der Hilfssteuereinheit 19 nicht nur ein hilfsweise Heben und Absenken bzw. Klappen von der Horizontalen in die Vertikale und umgekehrt der Ladeplattform 12 erreicht werden, sondern es kann auch mit dieser bzw. über diese schnellstens ermittelt werden, wo im elektrischen Steuersystem ein Fehler vorliegt. Des weiteren besteht an diesem Meßpunkt die Möglichkeit, eine Strommessung vorzunehmen, die Aufschluß darüber geben kann, ob ein Steuerglied 17, bspw. eine Ventilspule, einen erhöhten Stromfluß aufweist, was bspw. auf einen sich einstellenden Kurzschluß in der Spulenwicklung hinweist.

Die Hilfssteuereinheit 19 ist über das sie umgebende Gehäuse 194, vgl. Fig. 9, an geeigneter und gut zugänglicher Stelle im Bereich der druckerzeugenden Einrichtung 21 (Hydraulikaggregat) angeordnet und ermöglicht neben der Aufrechterhaltung der Vitalfunktionen des Ladebordwandsystems zusätzlich eine Erleichterung der Überprüfung der elektrischen Funktionen des Ladebordwandsystems 10.

Über die Klemmen 195 erfolgt die elektrische Verbindung des Steuer-, Regel- und Spannungsversorgungssystems des Ladebordwandsystems 10 mit der Hilfssteuereinheit 19. Die elektrischen Verbindungen sind in den Fig. 9 und 10 aus Übersichtlichkeitsgründen nicht dargestellt.

Die auf einer Leiterplatte bspw. angeordnete Hilfssteuereinheit 19, vgl. die Fig. 7 und 10, wird in das Gehäuse 194 hineingesteckt, so daß die Betätigungsorgane 20 mit in dem Gehäuse 194 ausgebildeten Löchern 196 fluchten. Dann wird die die Hilfssteuereinheit 19 umfassende Leiterplatte in Richtung des Pfeiles 197 nach oben gedrückt, so daß die Leiterplatte über die beidseitig in den Innenraum des Gehäuses 194 hineinstehenden Rastvorsprünge 198 gleiten kann, wobei dann die Leiterplatte fest im Gehäuse 194 aufgenommen ist und die Betätigungsorgane 22 durch die Löcher 196 des Gehäuses 194 hindurchragen und somit für die Auslösung der Hilfs-Funktionen des Ladebordwandsystems 10 im vorangehend beschriebenen Sinne zugänglich sind.

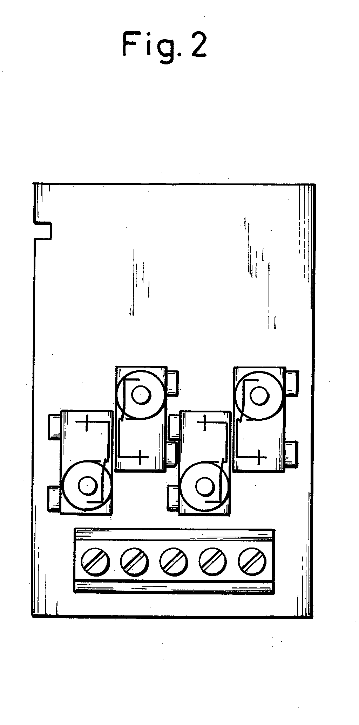

Bei dem in Fig. 1 dargestellten elektrisch betriebenen Steuersystem des Ladebordwandsystems 10 kann bspw. das Hilfssteuerelement 22 nach Art einer Steckkarte ausgebildet sein, vgl. Fig. 2, auf dem eine Mehrzahl von Betätigungsorganen 20 angeordnet ist. Die Betätigungsorgane 20 können bspw. Mikroschalter oder Sensorschalter sein. Es ist auch möglich, das Hilfssteuerelement 22 in Form einer sog. "Smart Card" auszubilden, das ggf. auch eine benutzerspezifische Codierung aufweisen kann, so daß tatsächlich nur die Personen die Vitalfunktionen des Ladebordwandsystems 10 im Falle der Störung oder des Ausfalls der Steuerung ausführen können, die dazu autorisiert worden sind. Diese Smart Card kann bspw. auch sog. Pin-Schalter aufweisen, so daß die Betätigungsorgane der Notsteuereinheit 19 direkt von der Smart Card aus betätigbar sind, wodurch eine noch größere Sicherheit in bezug auf unautorisierte Ausführung der Vitalfunktionen des Ladebordwandsystems 10 erreichbar ist.

### Bezugszeichenliste

- 10: Ladebordwandsystem
- 11: Fahrzeug
- 12: Ladeplattform
- 13: Hubaktuator
- 14: Klappaktuator
- 15: Handsteuerglied
- 16: Fußsteuerglied
- 17: Steuerglied (sonstiges)
- 18: Steuereinheit
- 19: Hilfssteuereinheit
- 190: Sicherung
- 191: Leuchtdiode
- 192: Widerstand
- 193: Motor
- 194: Gehäuse
- 195: Klemme
- 196: Loch
- 197: Pfeil
- 198: Rastvorsprung
- 20: Betätigungsorgan
- 21: druckerzeugende Einrichtung (Hydraulikaggregat)
- 22: Hilfssteuerelement
- 23: Untergrund/Fahrbahn
- 24: Spannungsversorgung
- 25: Schalter mit Indikator

## Patentansprüche

1. Ladebordwandsystem, insbesondere für Fahrzeuge, umfassend eine Ladebordwand zum Heben und Absenken einer Last, ggf. auch zum Klappen aus der Horizontalen in die Vertikale und aus der Vertikalen in die Horizontale, mittels eines Hubaktuators und ggf. eines Klappaktuators, wobei der Hubaktuator und ggf. der Klappaktuator über hand- und/oder fußbetätigbare Steuerglieder, die mit einer Steuereinheit sowie sonstigen Steuergliedern zusammenwirken, zum Heben und Absenken und ggf. zum Klappen der Ladebordwand gesteuert wird bzw. werden, **dadurch gekennzeichnet, daß** eine Hilfssteuereinrichtung (19) vorgesehen ist, mittels der wenigstens ein Steuersignal oder eine Steuersequenz zum Betrieb des Hubaktuators (13) und ggf. zum Betrieb des Klappaktuators (14) im Falle einer Störung und/oder eines Ausfalls von Steuergliedern (15; 16; 17) und/oder der Steuereinheit (18) und/oder eines Handhabungsfehlers wenigstens zum Erhalt von Vitalfunktionen des Ladebordwandsystems (10) erzeugbar ist.

2. Ladebordwandsystem nach Anspruch 1, **dadurch gekennzeichnet, daß** die Vitalfunktion wenigstens das Anheben der Ladeplattform (12) umfaßt.

3. Ladebordwandsystem nach Anspruch 1, **dadurch gekennzeichnet, daß** die Vitalfunktion wenigstens das Klappen der Ladeplattform (12) aus der Horizontalen in die Vertikale umfaßt.

4. Ladebordwandsystem nach einem oder mehreren der Ansprüche 1 bis 3, **dadurch gekennzeichnet, daß** das Steuersignal oder die Steuersequenz ein elektrisches Steuersignal oder eine elektrische Steuersequenz ist.

5. Ladebordwandsystem nach einem oder mehreren der Ansprüche 1 bis 3, **dadurch gekennzeichnet, daß** das Steuersignal oder die Steuersequenz ein hydraulisches Steuersignal oder eine hydraulische Steuersequenz ist.

6. Ladebordwandsystem nach einem oder mehreren der Ansprüche 1 bis 3, **dadurch gekennzeichnet, daß** das Steuersignal oder die Steuersequenz ein pneumatisches Steuersignal oder eine pneumatische Steuersequenz ist.

7. Ladebordwandsystem nach einem oder mehreren der Ansprüche 1 bis 4, **dadurch gekennzeichnet, daß** das Steuersignal oder die Steuersequenz mittels eines elektrischen Betätigungsorgans (20) ausgelöst wird.

8. Ladebordwandsystem nach einem oder mehreren der Ansprüche 1 bis 7, **dadurch gekennzeichnet, daß** die Hilfssteuereinheit (19) fest in dessen Steuer- und Regelsystem integriert ist.

9. Ladebordwandsystem nach einem oder mehreren der Ansprüche 1 bis 8, **dadurch gekennzeichnet, daß** die Hilfssteuereinheit (19) im Bereich der druckerzeugenden Einrichtung (21) für die Betätigung des Hubaktuators(13) und ggf. des Klappaktuators (14) angeordnet ist.

10. Ladebordwandsystem nach einem oder mehreren der Ansprüche 1 bis 9, **dadurch gekennzeichnet, daß** die Hilfssteuereinheit (19) in Form eines aus dem bzw. in das Steuer- und Regelsystem herausnehmbaren bzw. einsetzbaren Hilfssteuerelementes (22) ausgebildet ist.

11. Ladebordwandsystem nach Anspruch 10, **dadurch gekennzeichnet, daß** das Hilfssteuerelement (22) nach Art einer Steckkarte ausgebildet ist.

12. Ladebordwandsystem nach einem oder mehreren der Ansprüche 8 bis 11, **dadurch gekennzeichnet, daß** das Betätigungsorgan (20) ein Mikroschalter ist.

13. Ladebordwandsystem nach einem oder mehreren der Ansprüche 8 bis 11, **dadurch gekennzeichnet, daß** das Betätigungsorgan (20) ein Sensorschalter ist.

14. Ladebordwandsystem nach einem oder mehreren der Ansprüche 1 bis 13, **dadurch gekennzeichnet, daß** die Hilfssteuereinheit (19) nach Art einer einsteckbaren und herausnehmbaren Smart-Card ausgebildet ist.

15. Ladebordwandsystem nach einem oder mehreren der Ansprüche 8 bis 11, **dadurch gekennzeichnet, daß** das Betätigungsorgan (20) in Form einer numerischen oder ggf. alpha-numerischen Tastatur ausgebildet ist.
